# EUROPEAN PATENT SPECIFICATION

(11) **EP 4 273 660 B1**
(45) Date of publication and mention of the grant of the patent: **17.06.2026**
(21) Application number: 23170646.6
(22) Date of filing: 28.04.2023
(51) Int. Cl.: G05D 1/225, G05D 1/244, G05D 1/249, G05D 1/667, G05D 105/28, G05D 107/70, G05D 109/10, G05D 111/10

(54) **TRANSFER SYSTEM, METHOD FOR CONTROLLING A MOBILE BODY, AND PROGRAM**
ÜBERTRAGUNGSSYSTEM, VERFAHREN ZUR STEUERUNG EINES MOBILEN KÖRPERS, UND PROGRAMM
SYSTÈME DE TRANSFERT, PROCÉDÉ DE COMMANDE DE CORPS MOBILE, ET PROGRAMME

(30) Priority: 02.05.2022 JP 2022075935
(43) Date of publication of application: 08.11.2023
(73) Proprietor: Kabushiki Kaisha Toshiba, Minato-ku Tokyo (JP)
(72) Inventor: Yamamoto, Daisuke, Tokyo (JP); Maki, Yasunori, Tokyo (JP); Mori, Akihiro, Tokyo (JP); Terada, Akihito, Tokyo (JP); Kobayashi, Daisuke, Tokyo (JP); Ito, Yusuke, Tokyo (JP); Miyamoto, Takuya, Tokyo (JP); Yu, Zhengnan, Tokyo (JP)
(74) Representative: Hoffmann Eitle

(56) References cited:
- US-A1- 2012 191 272
- US-A1- 2017 097 232
- US-A1- 2018 089 616
- US-A1- 2018 253 678
- US-A1- 2020 338 763

## Description

### FIELD

Embodiments described herein relate generally to a transfer system, a control device, a mobile body, a method for controlling a mobile body, program, and a storage medium.

### BACKGROUND

There are systems that transfer articles by using a mobile body that travels. In such a system, technology that can more accurately obtain the position of the object transferred by the mobile body is desirable.

US 2020/0338763 A1 relates to a self-driving vehicle system with steerable camera and indicator. Patent Document US 2012/0191272 A1 relates to methods and an apparatus for tracking the location of one or more unit loads in a coordinate space in a facility.

US 2017/0097232 A1 relates to methods, apparatus, systems and computer-readable media for using sensor-based observations from multiple agents such as mobile robots and/or fixed sensors.

US 2018/0089616 A1 relates to path and load localization and operations supporting automated warehousing using robotic forklifts or other material handling vehicles.

US 2018/0253678 A1 relates to an inventory item management system, transporting device and the method for docking with inventory holders.

### BRIEF DESCRIPTION OF THE DRAWINGS

FIG. 1 is a perspective view showing a mobile body according to an embodiment;
FIG. 2 is a side view showing a mobile body and a transfer object according to the embodiment;
FIG. 3 is a schematic view showing a transfer system according to the embodiment;
FIG. 4 is a schematic view showing an application example of the transfer system according to the embodiment;
FIGS. 5A, 5B, 6A, and 6B are schematic views showing an operation of the transfer system according to the embodiment;
FIG. 7 is a flowchart showing a method for controlling according to the embodiment;
FIG. 8 is a schematic view for describing processing by the transfer system according to the embodiment;
FIG. 9 is a schematic view for describing processing by the transfer system according to the embodiment;
FIG. 10 is a schematic view for describing processing by the transfer system according to the embodiment;
FIG. 11 is a schematic view for describing processing by the transfer system according to the embodiment;
FIG. 12 is a perspective view showing a mobile body according to a first modification of the embodiment;
FIG. 13 is a schematic view showing a transfer system according to the first modification of the embodiment;
FIG. 14 is a perspective view showing a mobile body according to a second modification of the embodiment; and
FIG. 15 is a schematic view illustrating a hardware configuration.

### DETAILED DESCRIPTION

The present invention is defined by the independent claims. Preferred embodiments are defined by the dependent claims. Further aspects are provided for facilitating the understanding of the invention.

According to an embodiment, a transfer system comprises a mobile body, a detection object, and a first detecting part.
The mobile body is configured to travel and to transfer an object. The detection object is mounted to the object. The detection object is located at a higher position than the object when referenced to a surface on which the mobile body travels. The first detecting part is located at a higher position than the object when referenced to the surface. The first detecting part detects the detection object.

Various embodiments will be described hereinafter with reference to the accompanying drawings.

The drawings are schematic and conceptual; and the relationships between the thickness and width of portions, the proportions of sizes among portions, etc., are not necessarily the same as the actual values thereof. Further, the dimensions and proportions may be illustrated differently among drawings, even for identical portions.

In the specification and drawings, components similar to those described or illustrated in a drawing thereinabove are marked with like reference numerals, and a detailed description is omitted as appropriate.

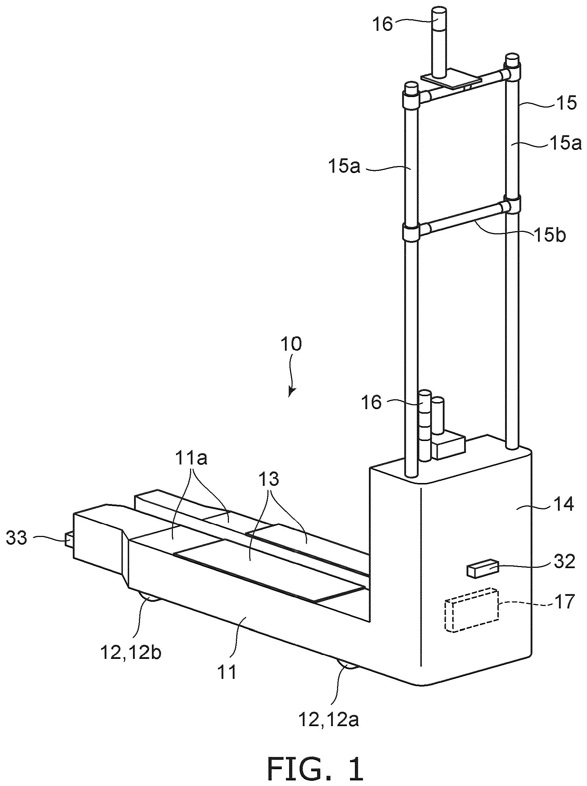

FIG. 1 is a perspective view showing a mobile body according to an embodiment.

The mobile body 10 according to the embodiment is configured to transfer an article by moving by traveling over a floor surface. As shown in FIG. 1, the mobile body 10 includes a vehicle body 11, wheels 12, a lifter 13, a housing 14, a support member 15, an indicator lamp 16, and a drive controller 17.

The vehicle body 11 has a shape that extends in the longitudinal direction. Herein, the travel direction of the mobile body 10 is taken as the "front". The direction opposite to the front is taken as the "back". Each wheel 12 is located at the lower surface of the vehicle body 11. For example, the multiple wheels 12 are drive wheels that use special wheels; and the mobile body 10 travels in all directions. The wheels 12 are driven by a not-illustrated drive source, battery, etc. The wheels 12 may include drive wheels and idler wheels; and the mobile body 10 may be driven by a differential drive technique. The wheels 12 may include a steering wheel, etc.

The vehicle body 11 includes a flat upper surface 11a. The vehicle body 11 includes the lifter 13. The lifter 13 can be raised and lowered with respect to the vehicle body 11. When the lifter 13 is raised, the flat upper surface of the lifter 13 moves upward with respect to the upper surface of the vehicle body 11. The housing 14 has a rectangular parallelepiped shape and is located at the front of the vehicle body 11. The support member 15 is located on the housing 14 and extends upward. In the illustrated example, the support member 15 includes posts 15a extending in the vertical direction and posts 15b extending in the horizontal direction.

The indicator lamps 16 are located respectively on the housing 14 and on the support member 15. When the mobile body 10 is in motion, the indicator lamps 16 are lit to alert the surrounding area. The drive controller 17 is housed in the housing 14 and controls the operations of the components of the mobile body 10. The drive controller 17 enables the mobile body 10 to travel autonomously without human operation.

A detecting part 32 and a detecting part 33 are located at the housing 14 to detect physical objects in the surrounding area. The detecting parts 32 and 33 each include, for example, distance sensors. From the perspective of the accuracy, it is favorable for the detecting parts 32 and 33 to include laser rangefinders (LRFs). A LRF scans a laser beam and receives the reflected light reflected from a physical object. The LRF measures the distance to the surface of the physical object based on a phase difference of the reflected light, an arrival time difference, etc. The LRF scans through a prescribed angle range of the surrounding area in the horizontal direction and measures distance data to the surfaces of the physical objects in the surrounding area at multiple points. Detecting parts 32 and 33 each detect physical objects in the surrounding area based on the LRF measurement results.

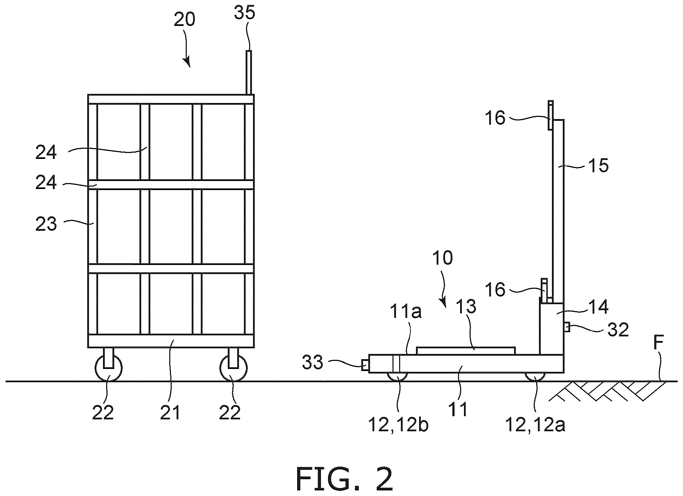

FIG. 2 is a side view showing a mobile body and a transfer object according to the embodiment.

The mobile body 10 can lift the object by positioning the vehicle body 11 under the transfer object and by raising the lifter 13. An example will now be described in which the transfer object is a cart. More specifically, the cart is a basket-shaped "basket cart" including multiple fences.

As shown in FIG. 2, the cart 20 includes a bottom plate 21, wheels 22, a frame body 23, and bars 24. The bottom plate 21 has a rectangular plate shape and is positioned horizontally. The wheels 22 are located at the four corners of the lower surface of the bottom plate 21. The frame body 23 is located along the vertical direction at the four sides of the upper surface of the bottom plate 21. The bars 24 are arranged in a lattice shape inside the frame body 23. The frame body 23 and the bars 24 form a fence. The frame body 23 and the bars 24 surround the space above the bottom plate 21. Packages can be loaded in the space surrounded with the bottom plate 21, the frame body 23, and the bars 24.

The cart 20 is transferred by the mobile body 10 traveling while the cart 20 is in a state of being lifted by the lifter 13. The lifter 13 is raised so that the wheels 22 of the cart 20 are separated from a floor surface F. Or, the lifter 13 may be raised so that the wheels 22 are not separated from the floor surface F. The application of the entire load of the cart 20 to the mobile body 10 can be avoided thereby. Once the mobile body 10 has moved the cart 20 to the prescribed location, the lifter 13 is lowered. The lifter 13 is separated from the bottom plate 21 of the cart 20; and the cart 20 is placed on the floor surface F. The transfer of the cart 20 is completed thereby.

Or, instead of the lifter 13, the mobile body 10 may include a coupler that couples the mobile body 10 and the cart 20. The mobile body 10 travels in a state of being coupled to the cart 20. The cart 20 is pulled by the mobile body 10 and transferred to the prescribed location.

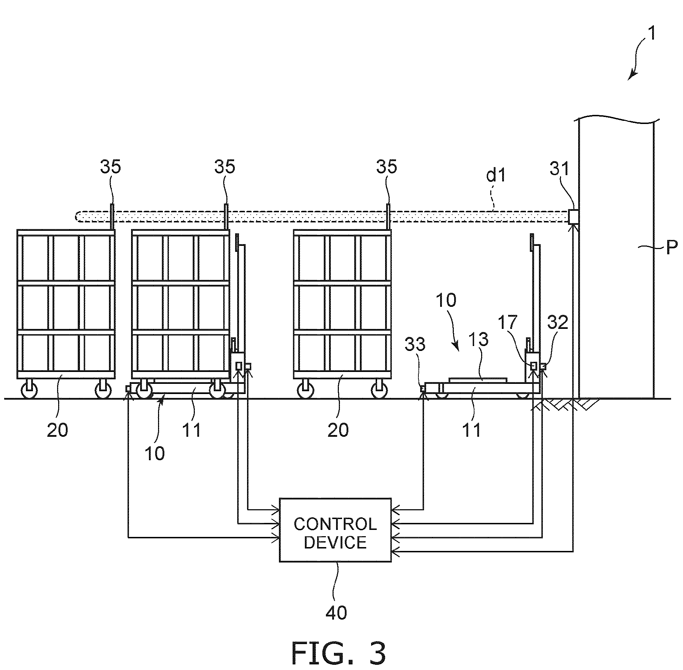

FIG. 3 is a schematic view showing a transfer system according to the embodiment.

As shown in FIG. 3, the transfer system 1 according to the embodiment includes the mobile body 10, a detecting part 31 (a first detecting part), the detecting part 32 (a second detecting part), the detecting part 33, and a marker 35 (a detection object).

As shown in FIGS. 2 and 3, the marker 35 is mounted to the cart 20. The marker 35 is a detection object of the detecting part 31 and is an example of the detection object. The marker 35 is, for example, cylindrical and is sufficiently small compared to the cart 20. A reflective material may be attached to the marker 35 in a cylindrical shape. It is favorable for the reflective material to be a retroreflective material that can reflect the light irradiated from the distance sensor toward the distance sensor. For example, a retroreflective sheet or the like can be used as the retroreflective material. The marker 35 is located at a higher position than the cart 20 when referenced to the floor surface F.

The detecting part 31 detects the marker 35. The detecting part 31 is located at a higher position than the cart 20 when referenced to the floor surface F. In the illustrated example, the detecting part 31 is fixed to a pillar P. The detecting part 31 includes a distance sensor. From the perspective of the accuracy, it is favorable for the detecting part 31 to include a LRF. The detecting part 31 has a horizontal two-dimensional detection range d1 and is for example located at the same height as the marker 35. The detection range d1 is positioned at the same height as the marker 35. The detecting part 31 detects the marker 35 based on the measurement result from the LRF.

The detecting part 32 is located at a lower position than the detecting part 31 and is positioned at the front of the vehicle body 11. For example, the detecting part 32 is located at the same height as a portion of the frame body 23. Similarly to the detecting part 31, the detecting part 32 has a horizontal two-dimensional detection range. The detecting part 32 detects the side surfaces of the cart 20 based on the measurement result from the LRF. Based on the detection result from the detecting part 32, the mobile body 10 is controlled not to contact other physical objects when the mobile body 10 advances.

The detecting part 33 is located at a lower position than the detecting part 32 and is positioned at the back of the vehicle body 11. For example, the detecting part 33 is located at the same height as the wheels 22. The detecting part 33 has a horizontal two-dimensional detection range. The detecting part 33 detects the wheels 22 of the cart 20 based on the measurement result from the LRF. After approaching the cart 20, the mobile body 10 inserts the vehicle body 11 under the cart 20 while backing. At this time, the mobile body 10 is controlled based on the detection result from the detecting part 33 so that the vehicle body 11 moves between the wheels 22 of the cart 20.

A control device 40 can transmit and receive data to and from the drive controller 17, the detecting part 31, the detecting part 32, and the detecting part 33 via wireless communication or a network. For example, the control device 40 receives the detection result of the marker 35 from the detecting part 31, the detection result of the side surfaces of the cart 20 from the detecting part 32, the detection result of the wheels 22 of the cart 20 from the detecting part 33, etc. The control device 40 controls the travel of the mobile body 10 by transmitting a command to the drive controller 17 based on the detection results of the detecting parts.

The control device 40 also executes processing necessary for the control of the mobile body 10 such as estimating the position of the mobile body 10 by self-estimation based on a map, generating a movement plan of the mobile body 10, etc. For example, the map is generated based on the detection result from the detecting part 31 and includes two-dimensional shapes related to environment-specific objects such as wall surfaces, pillars, fixed equipment, etc. The control device 40 calculates two-dimensional shapes related to the environment-specific objects around the mobile body 10 based on the detection result from the detecting part 32. The position and posture of the mobile body 10 are estimated by comparing the calculated two-dimensional shapes and the two-dimensional shapes of the map. The control device 40 refers to the two-dimensional shapes included in the map to generate the movement plan of the mobile body 10 to avoid obstacles. The movement plan includes the transit locations from the current location to the target location, the operation of the mobile body 10 between the locations, etc. For example, the control device 40 is provided as a higher-level system of multiple mobile bodies 10 and controls the multiple mobile bodies 10.

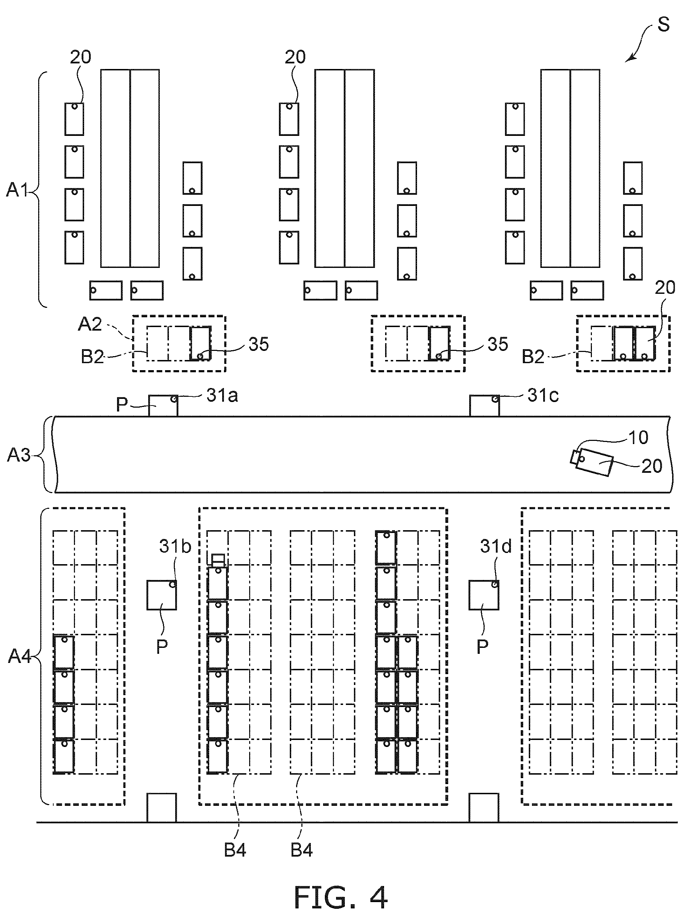

FIG. 4 is a schematic view showing an application example of the transfer system according to the embodiment.

The transfer system 1 according to the embodiment is applied to a logistics or manufacturing site S. The site S includes areas A1 to A4. The carts 20 on which packages are loaded are located in the area A1. The worker loads the packages onto the cart 20. When the packages are sufficiently loaded, the cart 20 is transported to the area A2 by the worker. The area A2 includes multiple sections B2; and one cart 20 can be located in one section B2. The cart 20 that is to be transferred by the mobile body 10 is located in the area A2. The mobile body 10 travels through the area A3 and transfers the cart 20 in the area A2 to the area A4. The carts that are transferred from the area A2 are arranged in the area A4. The area A4 includes multiple sections B4; and one cart 20 can be located in one section B4. The sections B2 and B4 have rectangular shapes corresponding to the shape of the cart 20.

Multiple detecting parts 31 (detecting parts 31a to 31d) are located in the site S. The detecting parts 31a to 31d have two-dimensional detection ranges. Each cart 20 includes a not-illustrated marker 35. Each marker 35 is detected by at least one of the detecting parts 31a to 31d.

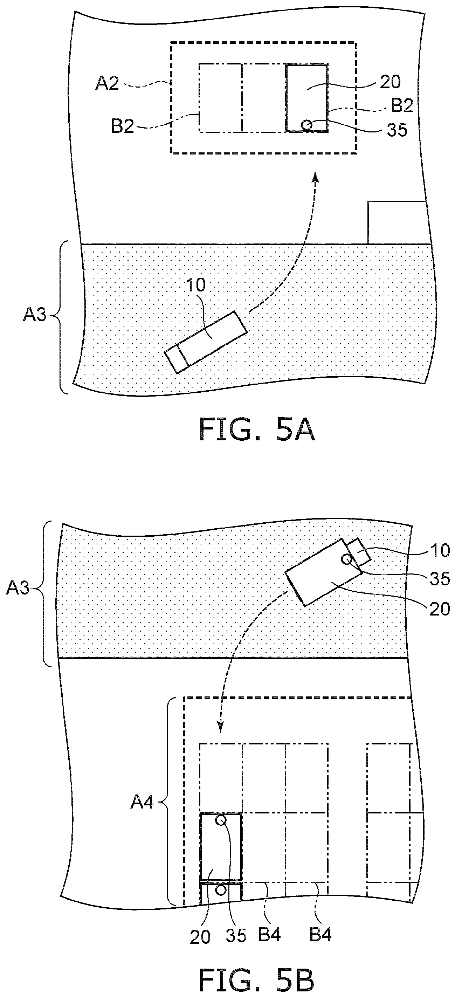

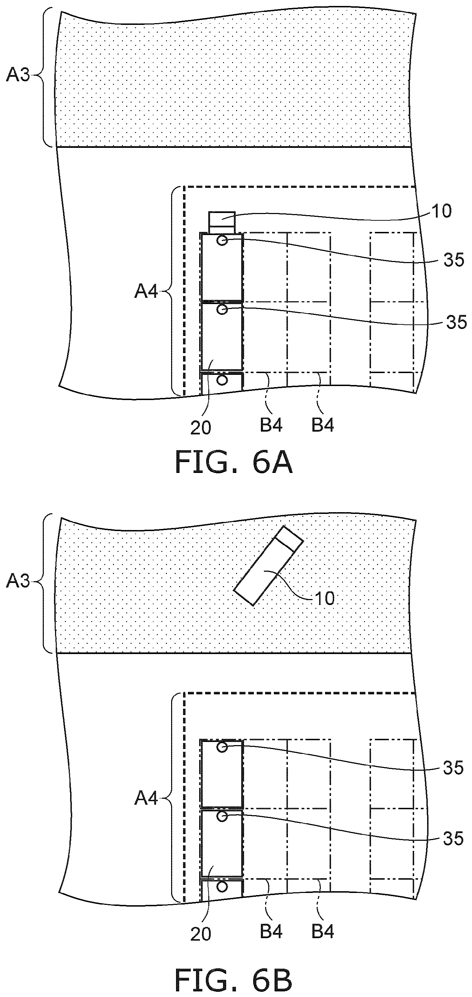

FIGS. 5A, 5B, 6A, and 6B are schematic views showing an operation of the transfer system according to the embodiment.

For example, as shown in FIG. 5A, the cart 20 is located in the area A2. The control device 40 calculates the position of the marker 35 on the map based on the detection result of the marker 35 from the detecting part 31. The position of the marker 35 can be considered to be the position of the cart 20. Based on the calculation result of the positions of the markers 35 (the carts 20) existing in the area A2, the control device 40 causes the mobile body 10 to travel to the position of one of the carts 20 located in the area A2 as shown in FIG. 5A.

The mobile body 10 backs toward the cart 20 when moving the vehicle body 11 under the cart 20. Based on the detection result from the detecting part 33, the mobile body 10 travels so that the vehicle body 11 is positioned between the wheels 22 of the cart 20. The mobile body 10 uses the lifter 13 to transfer the cart 20. The control device 40 causes the mobile body 10 transferring the cart 20 to travel to the area A4 via the area A3. Based on the detection result from the detecting part 32, the mobile body 10 travels without contacting other physical objects.

As shown in FIG. 5B, the mobile body 10 backs toward the section B4 when moving the cart 20 to a specific section B4 of the area A4. The control device 40 calculates the positions of the carts 20 arranged in the area A4 based on the measurement result from the detecting part 31. Based on the calculation result, as shown in FIG. 6A, the control device 40 causes the mobile body 10 to travel to a position next to the cart 20 located in the area A4. The mobile body 10 lowers the cart 20 when the mobile body 10 has transferred the cart 20 to the prescribed position. The transfer is completed thereby. As shown in FIG. 6B, the control device 40 causes the mobile body 10 to travel toward the next object to be transferred.

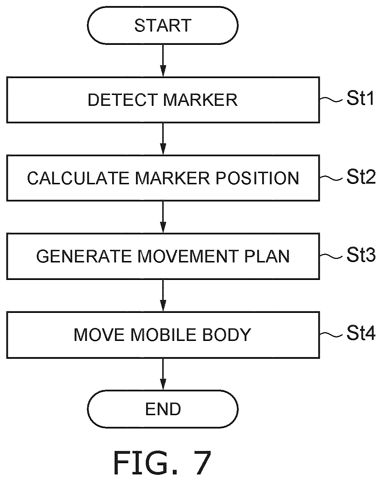

FIG. 7 is a flowchart showing a method for controlling according to the embodiment.

The detecting part 31 detects the marker 35 (step St1). Based on the detection result from the detecting part 31, the control device 40 calculates the position of the marker 35 on a map (step St2). The position of the marker 35 can be considered to be the position of the cart 20. Based on the calculated position of the cart 20, the control device 40 generates a movement plan of the mobile body 10 (step St3). The control device 40 causes the mobile body 10 to travel according to the movement plan (step St4). An example of a specific operation of the controlled mobile body 10 is as shown in FIGS. 5A to 6B.

Advantages of the embodiment will now be described.

Many carts are used in a logistics or manufacturing site. Mobile bodies that can automatically transfer such carts are used in the site to save manpower or conserve energy. When carts are transferred by a mobile body, the positions of the carts to be transferred, the positions of the carts already arranged, etc., are necessary. A sensor may be located at the vehicle body of the mobile body to detect the positions of the carts. However, it is difficult to detect the carts when there are many carts or the site is large. When the carts cannot be accurately detected, the mobile body 10 may contact the carts 20, or the cart 20 being transferred by the mobile body 10 may contact another cart 20.

For this problem, the transfer system 1 according to the embodiment includes the marker 35 mounted to the cart 20, i.e., the transfer object, and the detecting part 31 that detects the marker 35. The detecting part 31 and the marker 35 are located at higher positions than the cart 20. It is therefore difficult for the cart 20 to obstruct the detection by the detecting part 31. Even when multiple carts 20 are clustered, the markers 35 mounted to the carts 20 can be detected with high accuracy. The positions of the detected markers 35 correspond to the positions of the carts 20. According to the embodiment, a more accurate position of the cart 20 can be obtained.

The control device 40 controls the mobile body 10 based on the detection result from the detecting part 31. For example, the control device 40 causes the mobile body 10 to travel toward the cart 20 to which the detected marker 35 is mounted. Or, when the mobile body 10 transfers the cart 20, the control device 40 causes the mobile body 10 to travel to a position next to another cart 20 to which the detected marker 35 is mounted. By more accurately calculating the position of the cart 20, problems such as contact of the mobile body 10 with the cart 20, contact of the cart 20 being transferred with another cart 20, etc., occur less easily in such operations.

More desirable aspects of the embodiment will now be described.

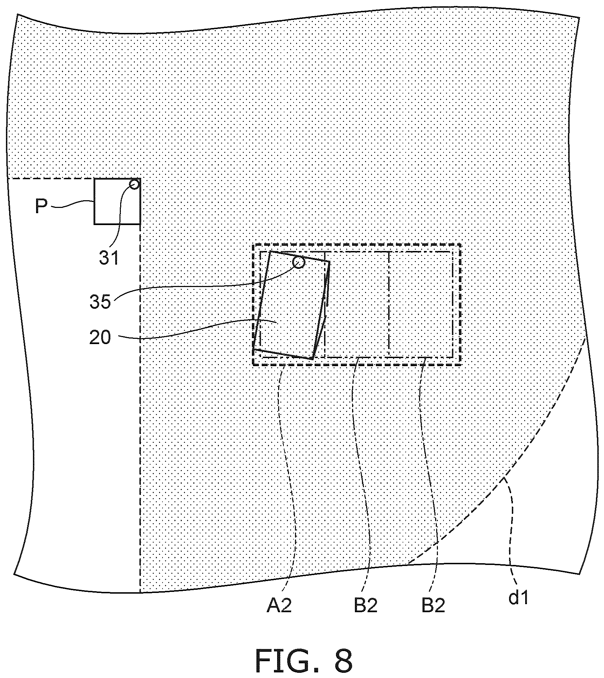

FIGS. 8 to 11 are schematic views for describing processing by the transfer system according to the embodiment.

The control device 40 may refer to a map when controlling the mobile body 10. The map shows the two-dimensional shapes of the environment such as pillars, wall surfaces, equipment, and the like in the site in which the mobile body 10 is used. The map includes the positions of the areas A1 to A4, the sections B2, and the sections B4.

When the marker 35 (the cart 20) is detected in the area A2 by the detecting part 31, the control device 40 compares the position of the marker 35 with the position of the section B2 as shown in FIG. 8. Specifically, the control device 40 determines whether or not the position of the detected marker 35 is within the region of the section B2 on the map. When the position of the marker 35 is within the region of the section B2, the control device 40 determines that the cart 20 exists in the section B2. The control device 40 causes the mobile body 10 to travel toward the section B2 in which the cart 20 is determined to exist.

When physical objects other than the marker 35 that are higher than the cart 20 exist in the site, there is a possibility that the detecting part 31 may misdetect a physical object other than the marker 35 as the marker 35. By comparing the position of the detected marker 35 with the stop position (the section B2) of the cart 20 on the map, it can be determined with high accuracy whether or not the cart 20 actually exists at the position of the marker 35.

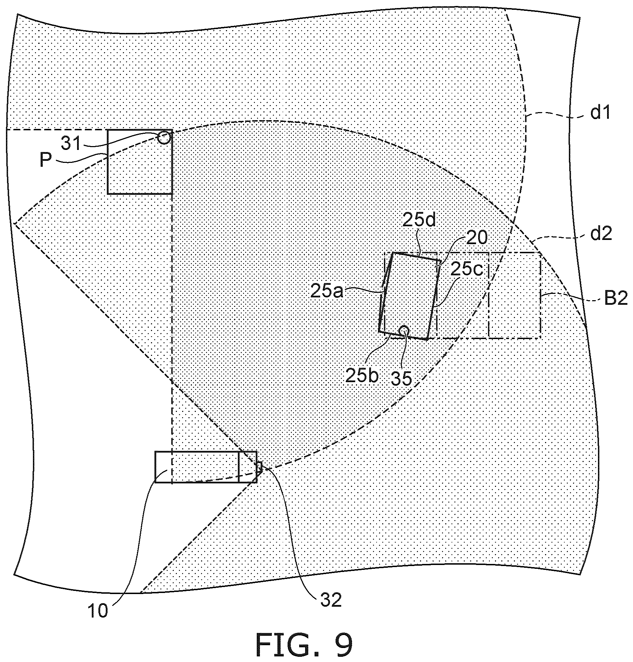

When the marker 35 is detected, the posture of the cart 20 corresponding to the marker 35 is calculated using the detection result from the detecting part 32 of the mobile body 10. As shown in FIG. 9, the detecting part 32 can detect surfaces facing the detecting part 32. In the illustrated example, the detecting part 32 can detect side surfaces 25a and 25b among the four side surfaces 25a to 25d of the cart 20.

The control device 40 calculates the posture of the cart 20 based on the detection result of the side surfaces 25a and 25b. For example, when the posture of the cart 20 located in the section B2 has been calculated, the control device 40 aligns the posture of the mobile body 10 with the posture of the cart 20. The cart 20 can be more stably transferred thereby. When the posture of the cart 20 located in the section B4 is calculated, the cart 20 being transferred can be caused to travel without contacting the cart 20.

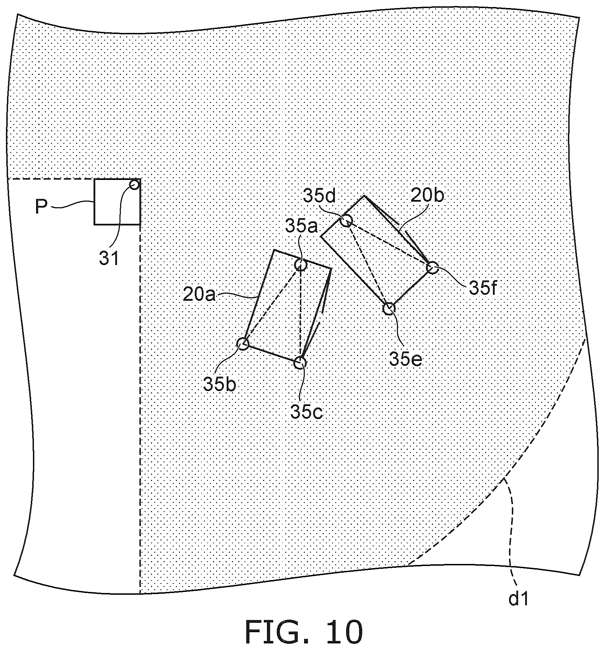

Multiple markers 35 may be provided on one cart 20. The positions of the markers 35 mounted to the cart 20 are pre-defined. In the example shown in FIG. 10, one marker 35 is located at the center of the front of the cart 20; and two markers 35 are located respectively at the two sides of the front of the cart 20. The detecting part 31 detects the multiple markers 35 (the markers 35a to 35f) shown in FIG. 10. The markers 35a to 35f are associated with the carts 20. In the illustrated example, the surest association is when the markers 35a to 35c are associated with a cart 20a; and the markers 35d to 35f are associated with a cart 20b.

The positions at which the markers 35 are mounted are pre-defined. Therefore, the posture of the carts 20 can be calculated by detecting the markers 35. By controlling the mobile body 10 based on the calculated posture, for example, the cart 20 can be transferred more stably. Or, the cart 20 being transferred can more reliably avoid contact with the other carts 20.

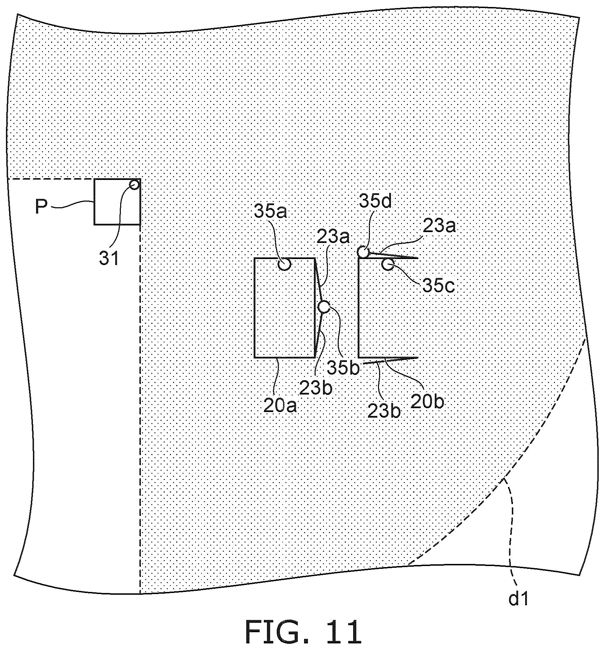

The detection result of the marker 35 may be used to detect not only the position of the cart 20 but also the state of the cart 20. For example, the frame body 23 at one side surface of the cart 20 may be openable and closable. In the example shown in FIG. 11, frame bodies 23a and 23b are provided as rotatable doors. One marker 35 is mounted at a location so that the position does not change even when the doors are opened and closed. Another marker 35 is mounted at a location so that the position changes when a door is opened and closed. In the illustrated example, the markers 35a and 35c are mounted to some frame body 23 other than the frame body 23a or 23b provided as a rotatable door. The markers 35b and 35d are mounted to one of the frame body 23a or 23b provided as a rotatable door.

The positional relationship between the markers 35 when the door is open is different from the positional relationship between the markers 35 when the door is closed. The control device 40 detects the state of the door based on the positional relationship between the markers 35. In the illustrated example, the door of the cart 20a is detected to be closed based on the positional relationship between the marker 35a and the marker 35b. The door of the cart 20b is detected to be open based on the positional relationship between the marker 35c and the marker 35d.

It is necessary for the doors to be closed for the cart 20 to be transferred. This is because the articles loaded in the cart 20 may fall out if the cart 20 is transferred with the doors in an open state. For example, even when the cart 20 is located in the area A2, the cart 20 is not transferred when the doors of the cart 20 are open. Only carts 20 having closed doors are transferred by the mobile body 10. The safety of the transfer system 1 can be increased thereby.

Also, the availability of the cart 20 for transfer can be indicated in the transfer system 1 by the state of the doors. For example, the worker closes the doors of the cart 20 when the preparation for transfer is finished. The control device 40 determines that the cart 20 may be transferred based on the positional relationship between the markers 35 when the doors are closed.

The marker 35 may be mounted as a visual indicator of the cart 20 to be transferred. For example, the worker of the site mounts the marker 35 to the cart 20 to be transferred among the carts 20 located in the area A2. When the marker 35 is mounted to the cart 20, the existence of the cart 20 is detected by the detecting part 31. The control device 40 causes the mobile body 10 to transfer the detected cart 20.

When the multiple detecting parts 31 are provided, one marker 35 may be detected by multiple detecting parts 31. In such a case, it is favorable to use the detection result from the detecting part 31 most proximate to the marker 35. This is because the accuracy of the measured distance increases as the distance between the detecting part 31 and the marker 35 decreases. The position of the marker 35 (the cart 20) can be calculated with higher accuracy as the accuracy of the distance increases.

The height of the cart 20 is generally 1.8 m to 2.0 m. In many sites, carts 20 having heights of 1.8 m and carts 20 having heights of 2.0 m are used. Therefore, the detection range of the detecting part 31 can be prevented from overlapping the cart 20 by providing the detecting part 31 higher than 2.0 m. Portions of the markers 35 are located higher than 2.0 m. On the other hand, the handling of the carts 20 to which the markers 35 are mounted may become difficult if the markers 35 are too high. For example, problems may occur if the cart 20 cannot be transferred into a truck due to interference by the marker 35. It is therefore favorable for the heights of the detecting part 31 and the marker 35 to be not more than 2.2 m.

It is unnecessary for the position of the detecting part 31 and the position of the marker 35 to be constantly higher than the cart 20. For example, the detecting part 31 and the marker 35 may be mounted higher than the cart 20 only when the mobile body 10 is in motion. A device that raises and lowers the detecting part 31 and the marker 35 may be provided, and the detecting part 31 and the marker 35 may be moved higher than the cart 20 only when the mobile body 10 is in motion.

The marker 35 may be mounted not only to the cart 20 but also to the mobile body 10. For example, the marker 35 is located on the support member 15. The marker 35 of the mobile body 10 also is positioned higher than the cart 20. The detecting part 31 calculates the position of the mobile body 10 in addition to the position of the cart 20.

For example, the detection result of the marker 35 of the mobile body 10 from the detecting part 31 is utilized in the self-estimation of the position of the mobile body 10. The accuracy of the self-estimated position can be increased by using the detection result of the marker 35 of the mobile body 10.

### First modification

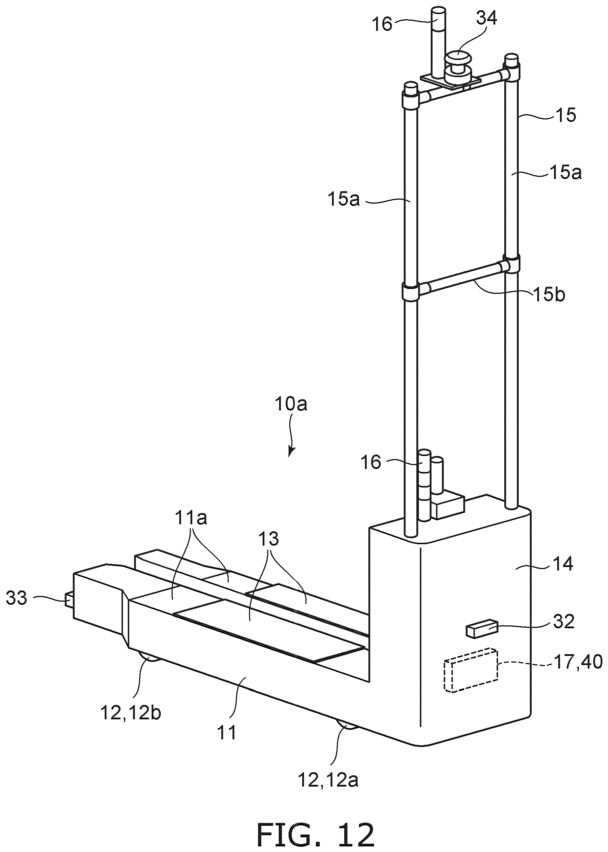

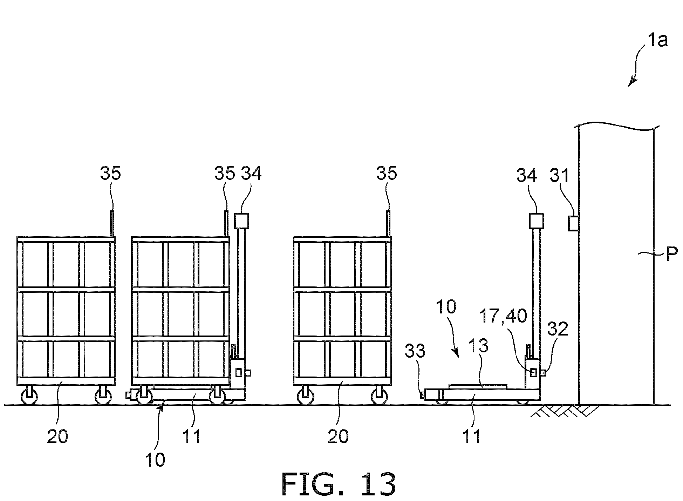

FIG. 12 is a perspective view showing a mobile body according to a first modification of the embodiment. FIG. 13 is a schematic view showing a transfer system according to the first modification of the embodiment.

Compared to the mobile body 10 shown in FIG. 1, the mobile body 10a according to the first modification shown in FIG. 12 further includes a detecting part 34 and the control device 40. A configuration similar to the mobile body 10 shown in FIG. 1 is applicable to the mobile body 10a for the components other than the detecting part 34 and the control device 40.

The detecting part 34 includes, for example, a distance sensor. From the perspective of the accuracy, it is favorable for the detecting part 34 to include a LRF. As in a transfer system 1a shown in FIG. 13, the detecting part 34 is located on the support member 15 and is at a higher position than the cart 20. The detecting part 34 may be located at the same height as the detecting part 31 and the marker 35. The indicator lamp 16 is located at the back of the detecting part 34 so as not to obstruct the detection by the detecting part 34. Based on the measurement result from the LRF, the detecting part 34 detects two-dimensional shapes such as wall surfaces, pillars, fixed equipment, etc. Based on the detection result from the detecting part 34, the control device 40 self-estimates the position of the mobile body 10 on a pre-generated map.

Otherwise, the control device 40 controls the mobile body 10a based on the detection results from the detecting parts 31 to 33 similarly to the transfer system 1. The control device 40 also functions as the drive controller 17. For example, the control device 40 detects the marker 35 (the cart 20) based on the detection result from a not-illustrated detecting part 31 located separately from the mobile body 10a. The control device 40 controls the travel of the mobile body 10a based on the detection result of the marker 35.

According to the first modification, the detection result from the detecting part 34 can be used to self-estimate the position of the mobile body 10a. The detecting part 34 is located at a higher position than the cart 20. For example, the position of the cart 20 is not detected by the detecting part 34.

The support member 15, the indicator lamp 16, the detecting part 34, and the like also may be detected by the detecting part 31 when the support member 15, the indicator lamp 16, the detecting part 34, and the like are located at the same height as the detecting part 31 and the marker 35. However, the support member 15, the indicator lamp 16, and the detecting part 34 can be easily discriminated from the cart 20 in the detection result due to differences in the estimation result of the position of the mobile body 10, the movements of the mobile body 10 and the cart 20, etc. The accuracy of the discrimination can be further increased by the marker 35 including a reflective material.

According to the first modification, the positions of physical objects such as wall surfaces, pillars, etc., that can be utilized for the self-estimation of the position can be detected with higher accuracy. By combining the detection result from the detecting part 34 with the detection result from the detecting part 31, a more accurate position of the mobile body 10 can be obtained in addition to the position of the cart 20.

### Second modification

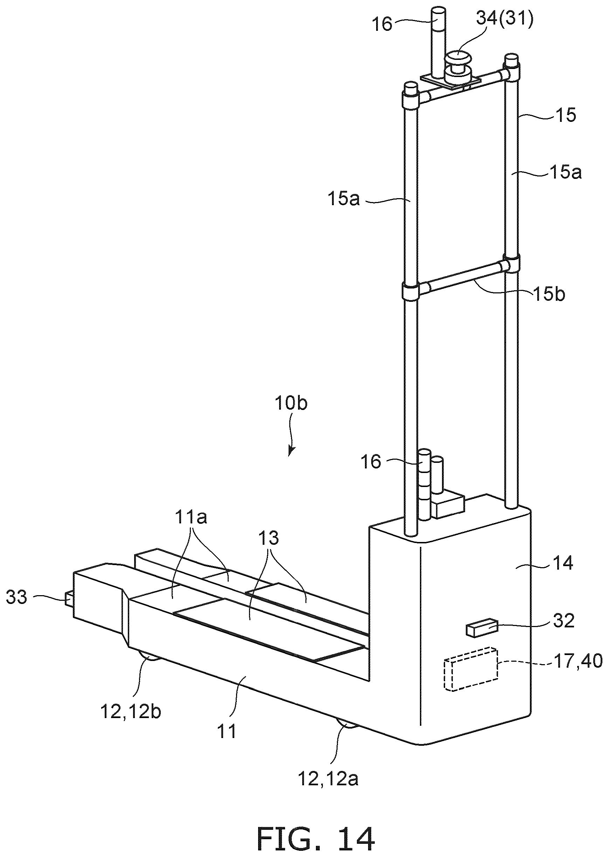

FIG. 14 is a perspective view showing a mobile body according to a second modification of the embodiment.

In the mobile body 10b according to the second modification shown in FIG. 14, the detecting part 34 also functions as the detecting part 31.

The control device 40 controls the mobile body 10a based on the detection results from the detecting parts 31 to 33. For example, the control device 40 detects the marker 35 (the cart 20) in the surrounding area of the mobile body 10a based on the detection result from the detecting part 31. The control device 40 controls the travel of the mobile body 10a based on the detection result of the marker 35. The control device 40 also may receive the positions of the markers 35 existing outside the surrounding area of the mobile body 10a from a higher-level system.

According to the second modification as well, similarly to the transfer system 1 shown in FIG. 3, the detecting part 31 is located at a higher position than the cart 20. Therefore, the marker 35 that is located at the higher position than the cart 20 can be detected with high accuracy. A more accurate position of the cart 20 can be obtained based on the position of the detected marker 35.

According to the second modification, the detecting part 31 at the pillar P shown in FIG. 3 can be omitted because the detecting part 34 also functions as the detecting part 31. Because the detecting part 34 functions as the detecting part 31 as well, the markers 35 at the front and side of the mobile body 10 can be detected regardless of the orientations of the surfaces of fixed objects such as the pillars P to which the detecting part 31 can be mounted.

Or, the detecting part 34 also may function as the detecting part 31; and the detecting part 31 may be located at the pillar P as well. By providing the detecting parts 31 at the mobile body 10b and the fixed object, the dead angles of the detection range of the detecting parts 31 can be reduced, and the positions of the carts 20 can be calculated with higher accuracy.

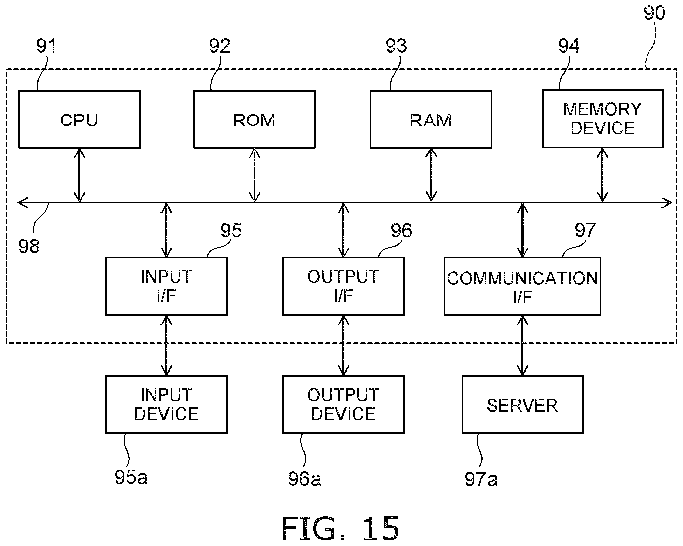

FIG. 15 is a schematic view illustrating a hardware configuration.

For example, a computer 90 shown in FIG. 15 is used as the control device 40. The computer 90 includes a CPU 91, ROM 92, RAM 93, a memory device 94, an input interface 95, an output interface 96, and a communication interface 97.

The ROM 92 stores programs that control the operations of the computer 90. Programs that are necessary for causing the computer 90 to realize the processing described above are stored in the ROM 92. The RAM 93 functions as a memory region into which the programs stored in the ROM 92 are loaded.

The CPU 91 includes a processing circuit. The CPU 91 uses the RAM 93 as work memory to execute the programs stored in at least one of the ROM 92 or the memory device 94. When executing the programs, the CPU 91 executes various processing by controlling configurations via a system bus 98. The memory device 94 stores data necessary for executing the programs and/or data obtained by executing the programs.

The input interface (I/F) 95 can connect the computer 90 and an input device 95a. The input I/F 95 is, for example, a serial bus interface such as USB, etc. The CPU 91 can read various data from the input device 95a via the input I/F 95.

The output interface (I/F) 96 can connect the computer 90 and an output device 96a. For example, the output I/F 96 is an image output interface such as Digital Visual Interface (DVI), High-Definition Multimedia Interface (HDMI (registered trademark)), etc. The CPU 91 can transmit data to the output device 96a via the output I/F 96 and can cause the output device 96a to display an image.

The communication interface (I/F) 97 can connect the computer 90 and a server 97a outside the computer 90. The communication I/F 97 is, for example, a network card such as a LAN card, etc. The CPU 91 can read various data from the server 97a via the communication I/F 97.

The memory device 94 includes at least one selected from a hard disk drive (HDD) and a solid state drive (SSD). The input device 95a includes at least one selected from a mouse, a keyboard, a microphone (audio input), and a touchpad. The output device 96a includes at least one selected from a monitor, a projector, a printer, and a speaker.

The processing executed by the control device 40 may be realized by one computer 90 or may be realized by the collaboration of multiple computers 90.

The processing of the various data described above may be recorded, as a program that can be executed by a computer, in a magnetic disk (a flexible disk, a hard disk, etc.), an optical disk (CD-ROM, CD-R, CD-RW, DVD-ROM, DVD±R, DVD±RW, etc.), semiconductor memory, or another non-transitory computer-readable storage medium.

For example, the information that is recorded in the recording medium can be read by the computer (or an embedded system). The recording format (the storage format) of the recording medium is arbitrary. For example, the computer reads the program from the recording medium and causes a CPU to execute the instructions recited in the program based on the program. In the computer, the acquisition (or the reading) of the program may be performed via a network.

According to embodiments described above, a transfer system, a control device, a mobile body, a control method, a program, and a storage medium are provided in which the position of a transfer object can be obtained more accurately.

## Claims

1. A transfer system (1), comprising:
a mobile body (10) configured to travel autonomously and transfer an object (20);
a detection object (35) mounted to the object (20), the detection object (35) being located at a higher position than the object (20) when referenced to a surface on which the mobile body (10) travels;
a first detecting part (31) located at a higher position than the object (20) when referenced to the surface;
a second detecting part (32) mounted to the mobile body (10); and
a control device (40) configured to control the mobile body (10), wherein
the first detecting part (31) includes a distance sensor that has horizontal two-dimensional detection range,
the second detecting part (32) is located at a lower position than the first detecting part (31),
the control device (40) is configured to
receive a first detection result of the detection object (35) from the first detecting part (31) and calculate a position of the object (20) based on the first detection result,
receive a second detection result of the object (20) from the second detecting part (32) and calculate a posture of the object (20) based on the second detection result, and
control the travel of the mobile body (10) based on the calculation results of the position and posture of the object (20).

2. The system (1) according to claim 1, wherein
the control device (40) is configured to cause the mobile body (10) to travel toward the object (20) to which the detected detection object (35) is mounted.

3. The system (1) according to claim 1 or 2, wherein
when the mobile body (10) transfers another object (20), the control device (40) causes the mobile body (10) to travel to a position next to the object (20) to which the detected detection object (35) is mounted.

4. The system (1) according to any one of claims 1 to 3, wherein
the control device (40) is configured to determine an existence or absence of the object (20) at a position of the detected detection object (35) by comparing the position of the detection object (35) with a stop position of the object (20) on a map.

5. The system (1) according to any one of claims 1 to 4, wherein
a plurality of the detection objects (35) is mounted to the object (20), and
the control device (40) is configured to calculate a position and a posture of the object (20) based on detection results of the plurality of detection objects (35) from the first detecting part (31).

6. The system (1) according to any one of claims 1 to 4, wherein
a plurality of the detection objects (35) is mounted to the object (20),
the object (20) includes a door, the door being openable and closable,
one of the plurality of detection objects (35) is mounted to the door, and
the control device (40) is configured to calculate a state of the door based on detection results of the plurality of detection objects (35) from the first detecting part (31).

7. The system (1) according to any one of claims 1 to 6, wherein
the first detecting part (31) is mounted to the mobile body (10).

8. The system (1) according to any one of claims 1 to 7, wherein
the detection object (35) is mounted by a human to the object (20) determined to be transferred.

9. The system (1) according to any one of claims 1 to 8, wherein
the detection object (35) includes a reflective material.

10. The system (1) according to any one of claims 1 to 9, comprising:
a plurality of the first detecting parts (31), wherein
when the detection object (35) is detected by the plurality of first detecting parts (31), the control device (40) controls the travel of the mobile body (10) based on a detection result from the first detecting part (31) most proximate to the detection object (35).

11. The system (1) according to any one of claims 1 to 10, wherein
the first detecting part (31) is a laser rangefinder,
the laser rangefinder is configured to scan a laser beam and receives the reflected light reflected from the detection object (35).

12. The system (1) according to any one of claims 1 to 11, wherein
the first detecting part (31) is mounted to a pillar.

13. A method for controlling a mobile body (10), the mobile body (10) being configured to travel autonomously and to transfer an object (20), the method comprising:
causing a first detecting part (31) to detect a detection object (35) mounted to the object (20), the detection object (35) being located at a higher position than the object (20) when referenced to a surface on which the mobile body (10) travels, the first detecting part (31) being located at a higher position than the object (20) when referenced to the surface;
causing a second detecting part (32) mounted to the mobile body (10) to detect the object (20);
and
controlling the mobile body (10), wherein
the first detecting part (31) includes a distance sensor that has horizontal two-dimensional detection range,
the second detecting part (32) is located at a lower position than the first detecting part (31),
in the controlling the mobile body (10), the method comprises
receiving a first detection result of the detection object (35) from the first detecting part (31) and calculating a position of the object (20) based on the first detection result,
receiving a second detection result of the object (20) from the second detecting part (32) and calculating a posture of the object (20) based on the second detection result, and
controlling the travel of the mobile body (10) based on the calculation results of the position and posture of the object (20).

14. The method according to claim 13, wherein
the mobile body (10) is caused to travel toward the object (20) to which the detected detection object (35) is mounted, or
when the mobile body (10) transfers another object (20), the mobile body (10) is caused to travel to a position next to the object (20) to which the detected detection object (35) is mounted.

15. A program, when executed by a computer, causing the computer to perform the method according to claim 13 or 14.

## Patentansprüche

1. Transfersystem (1), umfassend:
einen mobilen Körper (10), dazu konfiguriert, sich autonom fortzubewegen und ein Objekt (20) zu transferieren;
ein Detektionsobjekt (35), angebracht an dem Objekt (20), wobei sich das Detektionsobjekt (35) an einer höheren Position als das Objekt (20) befindet, bezogen auf eine Fläche, auf der sich der mobile Körper (10) fortbewegt;
eine erste Erfassungseinheit (31), die sich an einer höheren Position als das Objekt (20) befindet, bezogen auf die Fläche;
eine zweite Erfassungseinheit (32), angebracht an dem mobilen Körper (10); und
eine Steuerungsvorrichtung (40), dazu konfiguriert, den mobilen Körper (10) zu steuern, wobei
die erste Erfassungseinheit (31) einen Abstandssensor umfasst, der einen horizontalen zweidimensionalen Erfassungsbereich aufweist,
die zweite Erfassungseinheit (32) sich an einer niedrigeren Position als die erste Erfassungseinheit (31) befindet,
die Steuerungsvorrichtung (40) dazu konfiguriert ist,
ein erstes Erfassungsergebnis des Detektionsobjekts (35) von der ersten Erfassungseinheit (31) zu empfangen und eine Position des Objekts (20) auf der Grundlage von dem ersten Erfassungsergebnis zu berechnen,
ein zweites Erfassungsergebnis des Objekts (20) von der zweiten Erfassungseinheit (32) zu empfangen und eine Ausrichtung des Objekts (20) auf der Grundlage von dem zweiten Erfassungsergebnis zu berechnen, und
die Fahrt des mobilen Körpers (10) auf der Grundlage von den Berechnungsergebnissen der Position und der Ausrichtung des Objekts (20) zu steuern.

2. System (1) nach Anspruch 1, wobei
die Steuerungsvorrichtung (40) dazu konfiguriert ist, den mobilen Körper (10) zu veranlassen, sich zu dem Objekt (20), an dem das erfasste Detektionsobjekt (35) angebracht ist, zu bewegen.

3. System (1) nach Anspruch 1 oder 2, wobei
wenn der mobile Körper (10) ein anderes Objekt (20) transferiert, die Steuerungsvorrichtung (40) den mobilen Körper (10) veranlasst, sich zu einer Position neben dem Objekt (20), an dem das erfasste Detektionsobjekt (35) angebracht ist, zu bewegen.

4. System (1) nach einem der Ansprüche 1 bis 3, wobei
die Steuerungsvorrichtung (40) dazu konfiguriert ist, ein Vorhandensein oder Nichtvorhandensein des Objekts (20) an einer Position des erfassten Detektionsobjekts (35) zu bestimmen, indem die Position des Detektionsobjekts (35) mit einer Halteposition des Objekts (20) auf einer Karte verglichen wird.

5. System (1) nach einem der Ansprüche 1 bis 4, wobei
eine Vielzahl von Detektionsobjekten (35) an dem Objekt (20) angebracht ist, und
die Steuerungsvorrichtung (40) dazu konfiguriert ist, eine Position und eine Ausrichtung des Objekts (20) auf der Grundlage von Erfassungsergebnissen der Vielzahl von Detektionsobjekten (35) von der ersten Erfassungseinheit (31) zu berechnen.

6. System (1) nach einem der Ansprüche 1 bis 4, wobei
eine Vielzahl von Detektionsobjekten (35) an dem Objekt (20) angebracht ist,
das Objekt (20) eine Tür umfasst, wobei die Tür zu öffnen und zu schließen ist,
eines der Vielzahl von Detektionsobjekten (35) an der Tür angebracht ist, und
die Steuerungsvorrichtung (40) dazu konfiguriert ist, einen Zustand der Tür auf der Grundlage von Erfassungsergebnissen der Vielzahl von Detektionsobjekten (35) von der ersten Erfassungseinheit (31) zu berechnen.

7. System (1) nach einem der Ansprüche 1 bis 6, wobei
die erste Erfassungseinheit (31) an dem mobilen Körper (10) angebracht ist.

8. System (1) nach einem der Ansprüche 1 bis 7, wobei
das Detektionsobjekt (35) von einem Menschen an dem zum Transferieren bestimmten Objekt (20) angebracht ist.

9. System (1) nach einem der Ansprüche 1 bis 8, wobei
das Detektionsobjekt (35) ein reflektierendes Material umfasst.

10. System (1) nach einem der Ansprüche 1 bis 9, umfassend:
eine Vielzahl von ersten Erfassungseinheiten (31), wobei
wenn das Detektionsobjekt (35) durch die Vielzahl von ersten Erfassungseinheiten (31) erfasst wird, die Steuerungsvorrichtung (40) die Fahrt des mobilen Körpers (10) auf der Grundlage von einem Erfassungsergebnis von der ersten Erfassungseinheit (31) am nächsten zu dem Detektionsobjekt (35) steuert.

11. System (1) nach einem der Ansprüche 1 bis 10, wobei
die erste Erfassungseinheit (31) ein Laser-Entfernungsmesser ist,
der Laser-Entfernungsmesser dazu konfiguriert ist, einen Laserstrahl abzutasten und das von dem Detektionsobjekt (35) reflektierte Licht zu empfangen.

12. System (1) nach einem der Ansprüche 1 bis 11, wobei
die erste Erfassungseinheit (31) an einer Säule angebracht ist.

13. Verfahren zum Steuern eines mobilen Körpers (10), wobei der mobile Körper (10) dazu konfiguriert ist, sich autonom fortzubewegen und ein Objekt (20) zu transferieren, wobei das Verfahren umfasst:
Veranlassen einer ersten Erfassungseinheit (31), ein Detektionsobjekt (35) zu erfassen, das an dem Objekt (20) angebracht ist, wobei sich das Detektionsobjekt (35) an einer höheren Position als das Objekt (20) befindet, bezogen auf eine Fläche, auf der sich der mobile Körper (10) fortbewegt, wobei sich die erste Erfassungseinheit (31) an einer höheren Position als das Objekt (20) befindet, bezogen auf die Fläche;
Veranlassen einer zweiten Erfassungseinheit (32), die an dem mobilen Körper (10) angebracht ist, das Objekt (20) zu erfassen; und
Steuern des mobilen Körpers (10), wobei
die erste Erfassungseinheit (31) einen Abstandssensor umfasst, der einen horizontalen zweidimensionalen Erfassungsbereich aufweist,
die zweite Erfassungseinheit (32) sich an einer niedrigeren Position als die erste Erfassungseinheit (31) befindet,
wobei das Verfahren beim Steuern des mobilen Körpers (10) umfasst:
Empfangen eines ersten Erfassungsergebnisses des Detektionsobjekts (35) von der ersten Erfassungseinheit (31) und Berechnen einer Position des Objekts (20) auf der Grundlage des ersten Erfassungsergebnisses,
Empfangen eines zweiten Erfassungsergebnisses des Objekts (20) von der zweiten Erfassungseinheit (32) und Berechnen einer Ausrichtung des Objekts (20) auf der Grundlage des zweiten Erfassungsergebnisses, und
Steuern der Fahrt des mobilen Körpers (10) auf der Grundlage von den Berechnungsergebnissen der Position und der Ausrichtung des Objekts (20).

14. Verfahren nach Anspruch 13, wobei
der mobile Körper (10) veranlasst wird, sich zu dem Objekt (20), an dem das erfasste Detektionsobjekt (35) angebracht ist, zu bewegen, oder
wenn der mobile Körper (10) ein anderes Objekt (20) transferiert, der mobile Körper (10) veranlasst wird, sich zu einer Position neben dem Objekt (20), an dem das erfasste Detektionsobjekt (35) angebracht ist, zu bewegen.

15. Programm, das bei Ausführung durch einen Computer den Computer veranlasst, das Verfahren nach Anspruch 13 oder 14 auszuführen.

## Revendications

1. Système de transfert (1), comprenant :
un corps mobile (10) configuré pour se déplacer de manière autonome et transférer un objet (20) ;
un objet de détection (35) monté sur l'objet (20), l'objet de détection (35) étant situé à une position plus élevée que l'objet (20) par rapport à une surface sur laquelle le corps mobile (10) se déplace ;
une première partie de détection (31) située à une position plus élevée que l'objet (20) par rapport à la surface ;
une deuxième partie de détection (32) montée sur le corps mobile (10) ; et
un dispositif de commande (40) configuré pour commander le corps mobile (10), dans lequel
la première partie de détection (31) comprend un capteur de distance présentant une plage de détection bidimensionnelle horizontale,
la deuxième partie de détection (32) est située à une position plus basse que la première partie de détection (31),
le dispositif de commande (40) est configuré pour
recevoir un premier résultat de détection de l'objet de détection (35) provenant de la première partie de détection (31) et calculer une position de l'objet (20) sur la base du premier résultat de détection,
recevoir un deuxième résultat de détection de l'objet (20) provenant de la deuxième partie de détection (32) et calculer une orientation de l'objet (20) sur la base du deuxième résultat de détection, et
commander le déplacement du corps mobile (10) sur la base des résultats de calcul de la position et de l'orientation de l'objet (20).

2. Le système (1) selon la revendication 1, dans lequel
le dispositif de commande (40) est configuré pour amener le corps mobile (10) à se déplacer vers l'objet (20) sur lequel est monté l'objet de détection (35) détecté.

3. Le système (1) selon la revendication 1 ou 2, dans lequel
lorsque le corps mobile (10) transfère un autre objet (20), le dispositif de commande (40) amène le corps mobile (10) à se déplacer vers une position adjacente à l'objet (20) sur lequel est monté l'objet de détection (35) détecté.

4. Le système (1) selon l'une quelconque des revendications 1 à 3, dans lequel
le dispositif de commande (40) est configuré pour déterminer une présence ou absence de l'objet (20) à une position de l'objet de détection (35) détecté en comparant la position de l'objet de détection (35) avec une position d'arrêt de l'objet (20) sur une carte.

5. Le système (1) selon l'une quelconque des revendications 1 à 4, dans lequel
une pluralité d'objets de détection (35) est montée sur l'objet (20), et
le dispositif de commande (40) est configuré pour calculer une position et une orientation de l'objet (20) sur la base de résultats de détection de la pluralité d'objets de détection (35) provenant de la première partie de détection (31).

6. Le système (1) selon l'une quelconque des revendications 1 à 4, dans lequel
une pluralité d'objets de détection (35) est montée sur l'objet (20),
l'objet (20) comprend une porte, la porte pouvant être ouverte et fermée,
un de la pluralité d'objets de détection (35) est monté sur la porte, et
le dispositif de commande (40) est configuré pour calculer un état de la porte sur la base de résultats de détection de la pluralité d'objets de détection (35) provenant de la première partie de détection (31).

7. Le système (1) selon l'une quelconque des revendications 1 à 6, dans lequel
la première partie de détection (31) est montée sur le corps mobile (10).

8. Le système (1) selon l'une quelconque des revendications 1 à 7, dans lequel
l'objet de détection (35) est monté par une personne sur l'objet (20) destiné à être transféré.

9. Le système (1) selon l'une quelconque des revendications 1 à 8, dans lequel
l'objet de détection (35) comprend un matériau réfléchissant.

10. Le système (1) selon l'une quelconque des revendications 1 à 9, comprenant :
une pluralité de premières parties de détection (31), dans lequel
lorsque l'objet de détection (35) est détecté par la pluralité de premières parties de détection (31), le dispositif de commande (40) commande le déplacement du corps mobile (10) sur la base d'un résultat de détection provenant de la première partie de détection (31) la plus proche de l'objet de détection (35).

11. Le système (1) selon l'une quelconque des revendications 1 à 10, dans lequel
la première partie de détection (31) est un télémètre laser,
le télémètre laser est configuré pour émettre un faisceau laser et reçoit la lumière réfléchie par l'objet de détection (35).

12. Le système (1) selon l'une quelconque des revendications 1 à 11, dans lequel
la première partie de détection (31) est montée sur un pilier.

13. Procédé de commande d'un corps mobile (10), le corps mobile (10) étant configuré pour se déplacer de manière autonome et pour transférer un objet (20), le procédé comprenant :
le fait d'amener une première partie de détection (31) à détecter un objet de détection (35) monté sur l'objet (20), l'objet de détection (35) étant situé à une position plus élevée que l'objet (20) par rapport à une surface sur laquelle le corps mobile (10) se déplace, la première partie de détection (31) étant située à une position plus élevée que l'objet (20) par rapport à la surface ;
faire en sorte qu'une deuxième partie de détection (32) montée sur le corps mobile (10) détecte l'objet (20) ; et
la commande du corps mobile (10), dans lequel
la première partie de détection (31) comprend un capteur de distance qui présente une plage de détection bidimensionnelle horizontale,
la deuxième partie de détection (32) est située à une position plus basse que la première partie de détection (31),
lors de la commande du corps mobile (10), le procédé comprend
la réception d'un premier résultat de détection de l'objet de détection (35) provenant de la première partie de détection (31) et le calcul d'une position de l'objet (20) sur la base du premier résultat de détection,
la réception d'un deuxième résultat de détection de l'objet (20) provenant de la deuxième partie de détection (32) et le calcul d'une orientation de l'objet (20) sur la base du deuxième résultat de détection, et
la commande du déplacement du corps mobile (10) sur la base des résultats de calcul de la position et de l'orientation de l'objet (20).

14. Procédé selon la revendication 13, dans lequel
le corps mobile (10) est amené à se déplacer vers l'objet (20) sur lequel est monté l'objet de détection (35) détecté, ou
lorsque le corps mobile (10) transfère un autre objet (20), le corps mobile (10) est amené à se déplacer vers une position adjacente à l'objet (20) sur lequel est monté l'objet de détection (35) détecté.

15. Programme qui, lorsqu'il est exécuté par un ordinateur, amène l'ordinateur à mettre en œuvre le procédé selon la revendication 13 ou 14.
